# EUROPEAN PATENT APPLICATION

(11) **EP 3 213 631 A1**
(43) Date of publication of application: **06.09.2017**
(21) Application number: 15855058.2
(22) Date of filing: 08.10.2015
(51) Int. Cl.: A01L 11/00, A47C 4/00, A01K 13/00, A61D 3/00

(54) **IMPROVED SHOEING DEVICE**

(30) Priority: 28.10.2014 ES 201431405 U
(71) Applicant: Sanchez Martinez, Constantino, 28770 Colmenar Viejo - Madrid (ES)
(72) Inventor: Sanchez Martinez, Constantino, 28770 Colmenar Viejo - Madrid (ES)
(74) Representative: Urizar Anasagasti, Jesus Maria
(86) International application number: PCT/ES2015/070730
(87) International publication number: WO 2016/066870

(57) **Abstract**

The invention relates to an improved shoeing device basically comprising a tubular frame (1) secured to a bearing support (2) by means of an articulation element (3). The tubular frame (1) has a housing for a seat (5) post (4) in the upper part thereof, and also comprises a tools container (6). In the lower region of said tubular frame (1), there is a series of wheels (7). Said tubular frame (1) is provided with a ball bearing (12). The bearing support (2) has a bearing point (8) in the upper part thereof, which fits over the upper end of the primary tube (9), said primary tube (9) being secured to the secondary tube (10) which, in turn, is secured to the supporting base (11).

## Description

### OBJECT OF THE INVENTION

The object of the present invention is to present a new improved shoeing device, which provides a device for shoeing with a built-in rotating seat that is movable in distance and position with respect to the horse during the shoeing process.

This new improved shoeing device is especially applicable in the field of equestrianism, wherever a device that has said characteristics is required.

### BACKGROUND OF THE INVENTION

To date there are several types of tripods with adjustable height that facilitate the farrier's task by not making them support the weight of the leg of the horse, but that force them to keep their back bent forward in order to be able to work.

There is also a type of seat that the farrier can carry tied to their waist via straps, that allow them to adopt a seated position in some of the shoeing positions, but that force them to move with the chair permanently tied to their waist, with the consequent danger when faced with any defensive reactions from the animal.

The farrier, due to their professional activity, is principally exposed to posture problems, such as backaches and sciatica, caused by bad posture and the deep and repeated bending of the dorsolumbar spine, without having a rest position for the back at any moment during the shoeing.

In the current state of the art there is no type of shoeing device with the technical characteristics described in the present invention.

### DESCRIPTION OF THE INVENTION

This new improved shoeing device is fundamentally comprised of a tubular frame secured to a bearing support by means of an articulation element.

The tubular frame has a housing for a rotating seat post in the upper part thereof, and also comprises a tools container.

In the lower region of said tubular frame, there is a series of wheels.

The bearing support has a bearing point in the upper part thereof, which fits over the upper end of the primary tube.

The primary tube is secured to the secondary tube which, in turn, is secured to the supporting base.

This new improved shoeing device offers the following advantages:
It allows the farrier to work in the different shoeing postures in a seated position, in a more ergonomic position for their back, which enormously alleviates the lower back muscles, relieving back pain and more serious occupational injuries that farriers are subject to.

The articulation element, the incorporation of wheels and the fact that the seat is rotating as well all help the farrier change position quickly, without needing to change the position of the leg of the horse.

The seat is adjustable, in height and position, which allows it to adapt at each moment, according to the needs of the farrier.

Likewise, the height of the tripod column where the leg of the horse rests can be adjusted, in order to adapt it to the height of said leg.

### DESCRIPTION OF THE DRAWINGS

As a complement to the description provided herein, and for the purpose of helping to make the characteristics of the invention more readily understandable, the present specification is accompanied by a series of figures constituting an integral part of the same, which, by way of illustration and not limitation, represent the following:

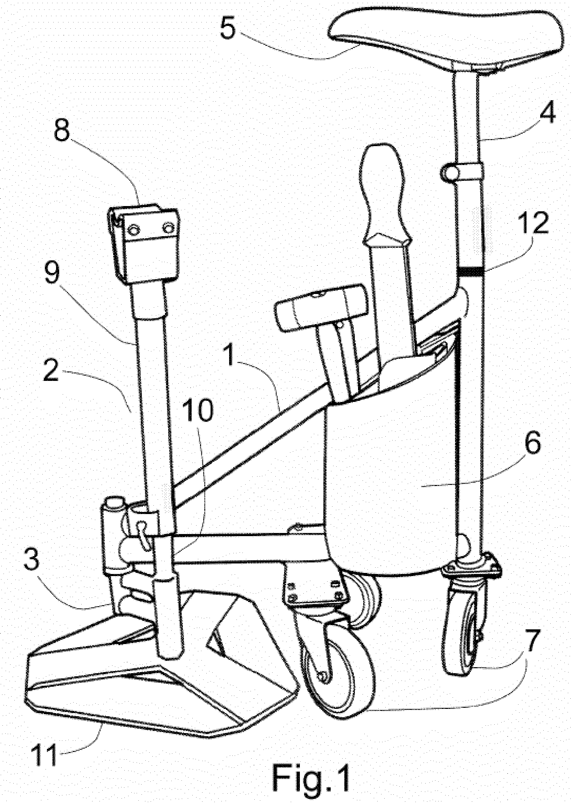

Figure 1: Side view of the improved shoeing device when folded.

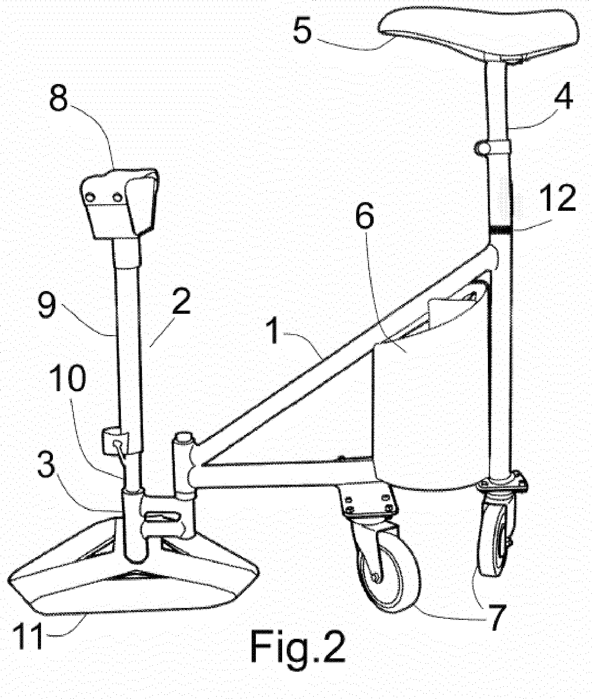

Figure 2: Side view of the improved shoeing device when unfolded.

### PREFERRED EMBODIMENT OF THE INVENTION

As seen in the attached figures, the improved shoeing device is made up of a tubular frame (1) secured to a bearing support (2) by means of an articulation element (3).

The tubular frame (1) has a housing for a seat (5) post (4) in the upper part thereof.

Said tubular frame (1) comprises a tools container (6), and a ball bearing (12).

In the lower region of said tubular frame (1), there is a series of wheels (7).

The bearing support (2) has a bearing point (8) in the upper part thereof, which fits over the upper end of the primary tube (9).

The primary tube (9) is secured to the secondary tube (10) which, in turn, is secured to the supporting base (11).

Having sufficiently described the nature of the present invention, in addition to an example of implementation, it must be added that the shape, arrangement and materials of said invention may be modified, provided that it does not imply altering the characteristics claimed below.

## Claims

1. An improved shoeing device, **characterized in that** it is made up of a tubular frame (1) secured to a bearing support (2) by means of an articulation element (3).

2. The improved shoeing device according to claim 1, **characterized in that** the tubular frame (1) has a housing for a seat (5) post (4) in the upper part thereof; said tubular frame (1) comprises a tools container (6); in the lower region of said tubular frame (1), there is a series of wheels (7); said tubular frame (1) has a ball bearing (12).

3. The improved shoeing device according to claim 1, **characterized in that** the bearing support (2) has a bearing point (8) in the upper part thereof, which fits over the upper end of the primary tube (9); said primary tube (9) being secured to the secondary tube (10) which, in turn, is secured to the supporting base (11).
